# EUROPEAN PATENT APPLICATION

(11) **EP 4 495 325 A1**
(43) Date of publication of application: **22.01.2025**
(21) Application number: 24188783.5
(22) Date of filing: 16.07.2024
(51) Int. Cl.: E01H 4/02

(54) **TRACKED VEHICLE FOR FINISHING THE GROUND, IN PARTICULAR A SNOW GROOMING VEHICLE, WITH A REPLACEABLE WORKING ASSEMBLY**

(30) Priority: 19.07.2023 IT 202300015177
(71) Applicant: PRINOTH S.p.A., 39049 Vipiteno (BZ) (IT)
(72) Inventor: GOGL, Andreas, 39049 VIPITENO (BZ) (IT)
(74) Representative: Studio Torta S.p.A.

(57) **Abstract**

A tracked vehicle for finishing the ground, comprising: a frame for supporting tracks and a cabin above; at least one supporting frame coupled to the main frame for coupling with at least one working assembly; at least one working assembly selectively couplable to the corresponding supporting frame to finish the ground during advancement of the vehicle; a coupling assembly configured to selectively couple the working assembly to the supporting frame; wherein the coupling assembly is switchable between a first configuration, in which it allows the supporting frame to reach a coupling position, and a second configuration in which, from the coupling position, it constrains the working assembly and the supporting frame to each other; wherein the vehicle comprises at least one monitoring device configured to monitor the reciprocal position of the supporting frame with respect to the working assembly during approach of the frame to the working assembly and to transmit to the driver an indication of the relative position of the supporting frame with respect to the working assembly.

## Description

### Cross-reference to related applications

This patent application claims priority from Italian patent application no. 102023000015177 filed on July 19, 2023, the entire disclosure of which is incorporated herein by reference.

### Technical field

The technical reference field for the present invention is the technical field of tracked vehicles for finishing or working the ground. Snow grooming vehicles, namely tracked vehicles configured to finish snow-covered ski slopes, are a preferred embodiment example of the present invention. By the term "finish" we mean carrying out given actions on the ground during advancement of the vehicle in order to give the ground (or the snowpack in the case of a snow groomer) a desired conformation. These vehicles comprise a main frame, which supports the tracks, and a cabin in which a driver controls the vehicle. A supporting frame that supports a corresponding working assembly comprising at least one device configured to work the ground is coupled frontally and/or at the rear to the main frame. In the case of snow groomers, the working assembly can be a tiller assembly comprising a tiller configured to first till the snowpack and a pad configured to give the snow a particular conformation. As known, the supporting frame is movable so that the working assembly can set to at least two positions relative to the main frame, namely a first lowered work position in which it acts on the ground and a second raised rest position in which it is not in contact with the ground and the vehicle can advance more freely. The working assembly can be disassembled at the end of work or replaced during work. In the initial assembly phase of the working assembly, the latter, since it has considerable dimensions, rests on the ground or on a support, and the operator moves the vehicle to bring the supporting frame to a particular coupling position in relation to the working assembly. In relative positions different from the coupling position, for example with greater or lesser relative distance or incorrect alignment between supporting frame and working assembly, it is not possible to perform the coupling between working assembly and supporting frame.

In this context, the present invention will address the problem of how to improve the phase prior to coupling of the working assembly to the supporting frame, namely the phase of relative approach between the supporting frame and the working assembly prior to the coupling thereof.

### State of the art

As indicated previously, the present invention refers to the technical field of tracked vehicles for working and finishing the ground. Only preferably, the present invention refers to the technical field of snow groomers, namely the tracked vehicles used for preparing or finishing snow-covered ski slopes. Although the present invention can therefore be extended to other fields and not only to snow groomers, for the sake of simplicity the present description will refer only to snow grooming vehicles. However, said example does not limit the protective scope of the present invention. In general, a vehicle for working and finishing the ground comprises a main frame (or bed) for supporting tracks mounted on the opposite sides of the vehicle and a driver's cab mounted centrally on the frame where the driver has the controls for operating the vehicle. Starting from this general structure, a vehicle of this type for working and finishing the ground usually comprises one or more particular working assemblies connected at the front or rear of the frame. In the field of snow groomers, a rear tilling assembly is usually provided configured to finish the snowpack, and a front blade configured to move large volumes of snow along the ski slopes. Construction details of these working assemblies present in the snow groomer will not be provided here since they are well known to persons skilled in the art.

It is known that the front or rear working assembly, the above-mentioned tiller assembly for the snow groomers, can assume two different configurations relative to the main frame of the vehicle. In particular, the tiller assembly for the snow groomers can be selectively switched between two configurations or positions. In a first position, which can be defined work position, the working assembly is in a position such as to act against the ground (or the snow) as the vehicle advances. In a second position, which can be defined rest position, the working assembly is in a position such as not to act against the ground (or the snow) as the vehicle advances. Since the passage from the first to the second position occurs by raising the working assembly, the first position can also be defined as lowered position and the second as raised position. To selectively switch from one to the other position, the vehicle comprises a supporting frame positioned between the working assembly and the main frame in which the supporting frame is movable relative to the main frame. The possible movements and how the supporting frame is connected to the main frame are matters known to persons skilled in the art.

The working assembly is coupled to the corresponding supporting frame in a releasable manner. In this way, when work is not being carried out on the ground, the vehicle can move more easily and furthermore it is possible to replace a working assembly with a different working assembly as required. The phases of coupling a working assembly to the corresponding supporting frame comprise the following steps. In the initial condition, a working assembly, having considerable dimensions and weight, rests on the ground or on a fixed support, and a tracked vehicle has a free supporting frame. In this condition the driver operates the vehicle from his control cabin to approach the vehicle to the working assembly. The object of said approach phase of the vehicle to the working assembly is to bring the supporting frame to a coupling position proximal to the working assembly in which the coupling can take place. Having reached this reciprocal coupling position, the next step consists in coupling the supporting frame and the working assembly to each other. Once said coupling step has been completed, the working assembly is integral with the supporting frame and the driver in his control cabin can operate the vehicle and the working assembly to carry out the desired work on the ground.

Currently two different methods are known for performing the phase of coupling the working assembly and the supporting frame. According to a first known technique, when the frame has reached the coupling position, the driver must leave the cabin, get out of the vehicle and act manually on the reciprocal coupling devices provided on the supporting frame and on the working assembly. Sometimes, unfortunately, the driver notices, only after he has got out of the vehicle, that in reality the supporting frame is not in the correct coupling position and he is therefore obliged to get back into the cabin, repeat the approach phase and, only afterwards, manually couple the working assembly to the frame. Analogously, also the release of the working assembly from the supporting frame requires manual actions carried out by the driver on the coupling devices provided on the supporting frame and on the working assembly. Obviously said known practice has considerable drawbacks because it requires manual actions by the driver and lengthy assembly times.

EP4029994 describes a second known technique and addresses the problem of how to overcome the above-described manual coupling phases of the working assembly to the supporting frame. EP4029994 provides the supporting frame with a coupling device which can be operated electrically or hydraulically, configured to couple to the working assembly in which said coupling device can be operated comfortably by the driver in the cabin. The known technique according to EP4029994 therefore does not require the driver to carry out manual coupling actions but only to operate the coupling device once the reciprocal coupling position between supporting frame and working assembly has been reached. For example, EP4029994 provides for a coupling system for shape coupling in which movable rods mounted on the supporting frame are operated to switch from a retracted position to an extended position in which they penetrate into corresponding holes obtained in the working assembly. Also in EP4029994 if the driver does not correctly perform the approach phase, the coupling cannot be carried out and the driver is obliged to repeat the approach phase. To reduce the risk of performing an incorrect approach phase, according to EP4029994 the coupling devices are positioned at the upper portions of the supporting frame and working assembly which protrude upwards to a height such as to be seen by the driver in the cabin. In this way the driver can easily visually check the reciprocal position of the supporting frame relative to the working assembly during the approach phase, thus reducing the risk of incorrect positioning prior to operating the coupling device (which is operated directly in the cabin as indicated previously).

### General description of the invention

Starting from the known art described in the preceding chapter, in particular the solution described in EP4029994 but also referring to embodiments in which coupling is performed by hand, the main object of the present invention is to perfect the approach phase of the supporting frame (integral with the vehicle) to the working assembly (resting on the ground or on a fixed support) to further reduce the risk of incorrect reciprocal positioning between the supporting frame and the working assembly. In this way, the subsequent coupling phase can be carried out without problems (whether performed manually or with specific coupling devices that can be operated from the cabin) .

A tracked vehicle in which the present invention can be integrated is a vehicle comprising:
- a main frame configured to support tracks laterally and a cabin above in which a driver can operate the vehicle;
- at least one supporting frame coupled in a movable manner to the front and/or rear of the main frame and configured to be selectively releasably coupled to at least one working assembly, preferably a tiller assembly if the vehicle is a snow groomer;
- at least one working assembly couplable in a selectively releasable manner to the corresponding supporting frame and configured to finish the ground (snowpack in the case of a snow groomer) during advancement of the vehicle;
- a coupling assembly configured to selectively couple the working assembly to the supporting frame; in which the coupling assembly is switchable between a first configuration, in which it allows (namely does not obstruct) the supporting frame to reach a reciprocal coupling position (proximal) with respect to the working assembly to be mounted, and a second configuration, in which, from the reciprocal coupling position, it constrains the working assembly to the supporting frame so that the working assembly can be moved and operated by the vehicle driver.

No further details are required with regard to the above, it being a matter well known to persons skilled in the art. For example, in the field of snow groomers, it is common practice to have a rear tiller assembly which, once coupled to the relative supporting frame, can be selectively lifted from the ground under the control of the driver in the cabin.

In relation to the above, the indications "laterally" and "at the front/at the rear" refer to the direction of advancement of the tracked vehicle.

For the purposes of the present invention, the term "ground" does not mean exclusively the surface layer of the earth's surface in a geological sense but in general the surface with which the vehicle cooperates during advancement. Therefore, since the preferred application of the present invention is relative to snow groomer vehicles, the ground according to the present invention is mainly a snowpack and/or icepack. However, in other applications the ground can be a turfed or muddy surface in a forestry or agricultural setting.

According to the main aspect of the present invention, the tracked vehicle as described previously further comprises at least one monitoring device configured to monitor the reciprocal position of the supporting frame with respect to the working assembly so that, at least in the last phases of approach of the frame to the working assembly to be mounted, it generates a signal giving the driver a precise indication of the relative position between the supporting frame and the working assembly. In this way the correct approach of the frame to the working assembly no longer depends solely on the visual capacity or skill of the driver (as in both the known techniques described previously); during the approach manoeuvre, the driver can also use the information provided by the monitoring device in the cabin. Embodiment examples of said monitoring device can be a camera or a webcam and/or proximity sensors or equivalents in which the signal generated by said devices can be of visual and/or acoustic type transmitted to the cabin so that it is available to the driver (for example to be reproduced on a screen or display). The portions observed or monitored by the monitoring device, namely the portions of the working assembly framed by the camera during the approach phases, can be in the vicinity of the coupling area or also distal portions.

Preferably, on the supporting frame and on the working assembly, graphic elements are provided configured so that when the coupling position is reached, they give the driver an evident visual signal (always by transmission of the image from the monitoring device to the cabin). For example, said graphic elements can be colored strips contrasting with the color of the supporting frame and on the working assembly.

Preferably, the monitoring device can be configured also to transmit to the driver suggestions on how to arrive at the correct coupling position during the maneuver.

Preferably, at least one recognition or identification element (of the barcode type, for example) can be shown or reproduced on the working assembly. In this case the monitoring device is able to read the barcode, transmit said data to a control unit which, based on said information and other information stored in a memory, identifies which is the working assembly to be mounted and automatically guides the vehicle (and controls the supporting frame) until the correct coupling position has been reached.

The coupling assembly, configured to be operated once the coupling position has been reached to constrain the supporting frame and the working assembly to each other, can be of any type. According to the present invention, the coupling assembly can be of the hand-operated type, in which case the driver must leave the cabin, or can be directly operated from the cabin (electrically or hydraulically or in any other way). According to one embodiment example, the coupling assembly can comprise telescopic rod elements mounted on the supporting frame (active part of the coupling assembly) which can switch from a retracted configuration (in which they do not limit or obstruct the approach phase to the working assembly) to an extended position in which, with the supporting frame in the correct coupling position, they penetrate into seats or holes (passive part of the coupling assembly) provided in the working assembly. Operation of the active part of the coupling assembly can be, for example, of electric or hydraulic type.

Preferably, it is possible to provide a system for locking the coupling assembly in the work configuration (in which it constrains the working assembly to the supporting frame) and said locking system can be mechanical or hydraulic. Preferably, in the cabin the driver can operate appropriate controls to deactivate the above-mentioned lock during release of the working assembly from the supporting frame.

If the vehicle is a snow groomer, the working assembly can comprise, as known, a frame that supports a tiller and a finishing pad.

The invention can also concern an operating method of a tracked vehicle for finishing the ground, in particular a method for selectively coupling a front or rear working assembly for finishing ski slopes to a snow groomer vehicle. Said method comprises the steps of:
a) providing a tracked vehicle comprising a cabin for a driver where the latter can control the vehicle, a main frame that supports the tracks and at least one front and/or rear supporting frame; in which the supporting frame comprises first coupling devices to selectively releasably couple the supporting frame to a working assembly (which can be of various types to carry out different jobs);
b) providing at least one working assembly to be mounted on the vehicle, in which the working assembly is initially resting on the ground or on a fixed support and comprises second coupling devices that can be coupled in a selectively releasable manner to the first coupling devices of the vehicle supporting frame; in which the coupling between the first and the second coupling devices can be made only at a reciprocal coupling distance or position;
c) moving the tracked vehicle to bring the first coupling devices of the supporting frame to the reciprocal coupling distance or position with respect to the second coupling devices of the working assembly;
d) coupling, manually or via operating devices that can be controlled from the cabin, the first and the second coupling devices to one another to make the working assembly integral with the supporting frame.

According to the invention, step c) of moving the tracked vehicle to bring the first coupling devices of the supporting frame to the reciprocal coupling distance with respect to the second coupling devices of the working assembly comprises the sub-steps of:
e) monitoring via a monitoring device, for example via a camera or proximity sensors or equivalent devices, the reciprocal position of the vehicle in movement with respect to the working assembly at a standstill;
f) transmitting a visual and/or acoustic signal to the driver in the cabin according to what has been monitored by the monitoring device to assist or guide the driver towards the correct coupling position.

Preferably, the signal generated by the monitoring device, alternatively to or in association with the transmission in the cabin, can be transmitted to a control unit which, based on said information and if necessary other information stored in a memory, can identify the working assembly and autonomously control the vehicle to bring it to the coupling position without the intervention of the driver.

### List of the figures

Further characteristics and advantages of the present invention will appear clear from the following description of a nonlimiting embodiment example thereof, with reference to the figures of the attached drawings, in which:
- figure 1 shows a schematic view in side elevation of a snow groomer vehicle for finishing ski slopes;
- figure 2 is an enlarged perspective view of some components of the snow groomer vehicle of figure 1; namely the tiller assembly with the frame and the lifting device in addition to a pair of stabilizer devices according to the present invention; the remaining part of the vehicle has been omitted for the sake of convenience;
- figures 3 and 4 show two different positions of the tiller assembly with respect to the main frame, a lowered working position and a raised rest position respectively;
- figure 5 shows an enlarged view of some components of figure 2; namely the frame and the lifting device in addition to a pair of stabilizer devices according to the present invention;

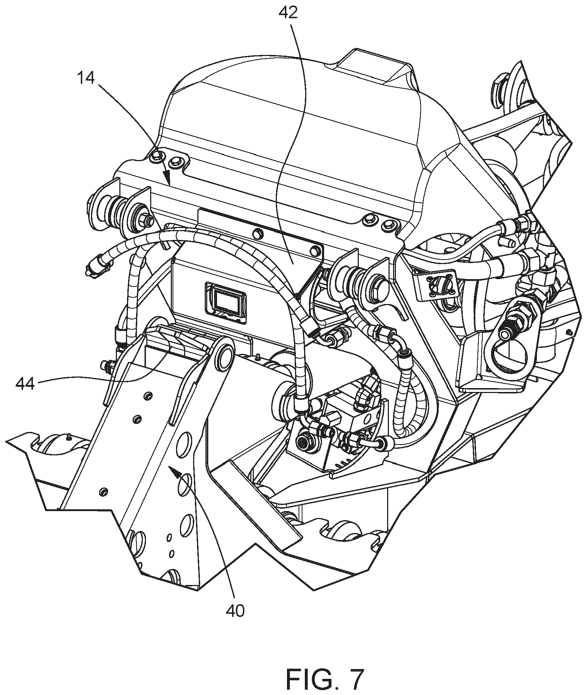

- figures 6 and 7 show schematically some elements that are integrated in an innovative manner in the vehicle of the preceding figures to achieve the predefined object of the present invention.

### Description of an embodiment of the invention

With reference to the figures listed above, a preferred embodiment of the present invention will be described below, namely an innovative snow groomer vehicle will be described.

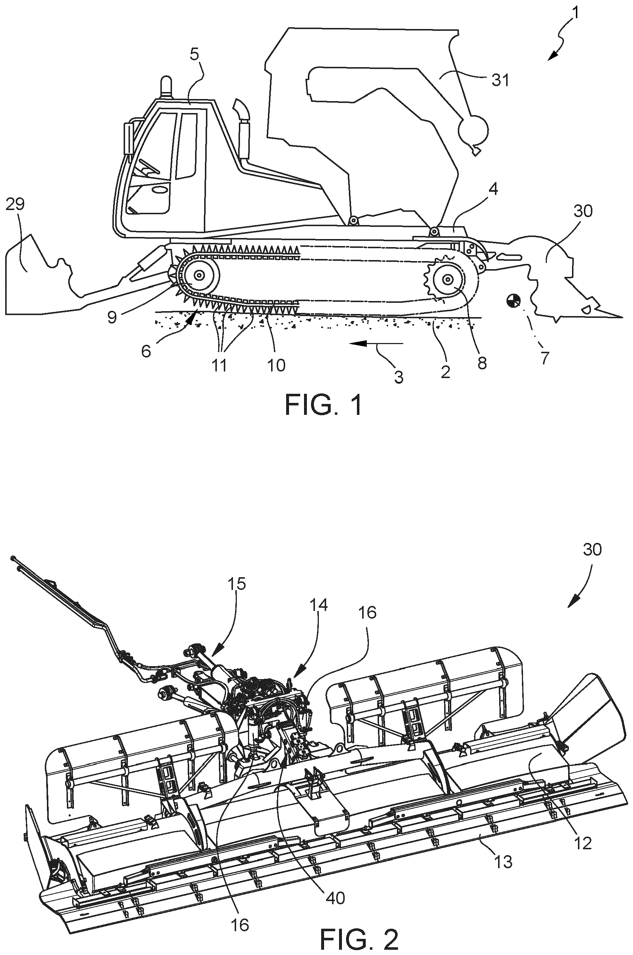

With reference to figure 1, said figure shows a schematic view of a snow groomer vehicle 1, namely a preferred example of a tracked vehicle that can be equipped with the technical solution described in the present invention to improve the assembly phases of a front or rear working assembly. Said snow groomer 1 is a tracked vehicle and is motorized to advance along the ground 2 in an advancement direction 3. As indicated previously, the term "ground" indicates a multiplicity of different surfaces on which the vehicle rests. Usually, namely during normal use of the snow groomer 1, the ground is a snowpack but the ground could also be a different contact surface, for example an icepack or a hard surface or other. As already mentioned, the present invention extends also to other vehicles configured to finish other types of ground. Naturally, also the advancement direction 3 can be different from the one indicated, namely, for example, the snow groomer 1 can also advance in reverse. The snow groomer vehicle 1 of figure 1 comprises a rear tiller assembly 30 (claimed as "working assembly") configured to work the snowpack 2, a front blade 29 (which can be considered a second working assembly) to move volumes of snow and a winch assembly 31. The snow groomer 1 of figure 1 further comprises a main frame 4, a driver's cabin 5 mounted in the frame 4 and two tracks 6 mounted on opposite sides of the frame 4. Each track 6 comprises a plurality of belts 10 set as a ring between a front wheel 9 and a rear wheel 8. Furthermore, each track 6 comprises a plurality of cross bars 11 fixed to the belts 10. The advancement direction of the belts 10 defines the direction that will be indicated in the description below as longitudinal direction 3 whereas the rotation axes of the wheels 8, 9 define the transverse direction 7 orthogonal to the longitudinal direction 3.

Figure 2 is an enlarged perspective view of some components of the snow groomer vehicle of figure 1. In particular, figure 2 shows the tiller assembly 30 and parts of the vehicle 4. In said example the tiller assembly comprises a frame 40 that supports a tiller device 12 and a pad device 13. Further construction details of the tiller assembly 30 are not provided because they are known to persons skilled in the art and because the composition of the tiller assembly 30 does not constitute a constraint for the present invention. In other words, the tiller assembly can be of any type and in addition can be a working assembly different from a tiller assembly. The only requirement for the working assembly to be integrated with the present invention is that the latter can be selectively couplable to the snow groomer 1. For said purpose the frame 40 of the tiller assembly 30 of figure 2 is configured to be selectively connected to a lifting frame 14 (claimed as "supporting frame") constrained to the main frame 4 of the vehicle 1 on the opposite side with respect to the pad 13. The reference 15 indicates a lifting arm 15, namely a device configured to raise the supporting frame 14 and therefore also the tiller assembly 30. In this example a pair of stabiliser devices 16 are provided between the lifting frame 14 and the tiller assembly 30. In figure 2 the rest of the vehicle 1 has been omitted for the sake of convenience.

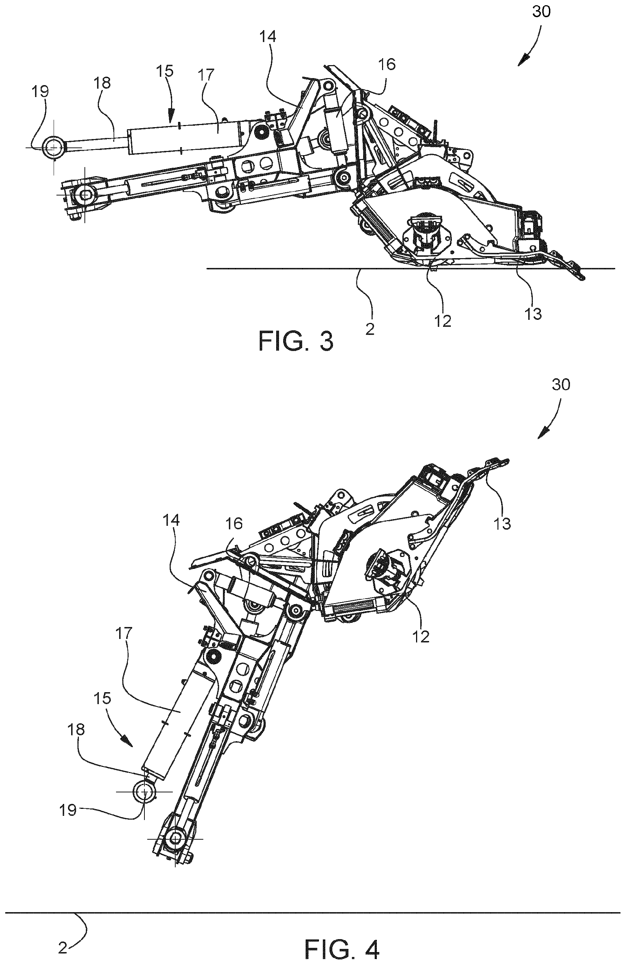

Figures 3 and 4 show two different positions of the tiller assembly 30 with respect to the vehicle, namely with respect to the ground 2, thanks to the movement of the supporting frame 14. Respectively, figure 3 shows a lowered work position of the tiller assembly 30 in which the tiller 12 and the skid 13 act against the ground 2 (namely the snowpack). Figure 4 shows a raised rest position of the tiller assembly 30 in which the tiller 12 and the pad 13 are in a position such as not to collaborate with the ground 2. In said example the lifting device 15 is a hydraulic actuator configured to lift the supporting frame 14 by rotation around an axis parallel to the transverse direction 7. According to figure 3 the lifting device 15 comprises a cylinder 17 in which a piston 18 runs driven by a fluid supplied to said cylinder. The rotation axis of the lifting device of the tiller assembly 30 corresponds to the coupling point between the lifting device 15 and the main frame 4. Said point is schematized by the reference number 19. As can be seen in figure 4 the piston 18 is in a position with greater penetration into the cylinder 17 due to the actuation thereof and lifting of the tiller assembly 30.

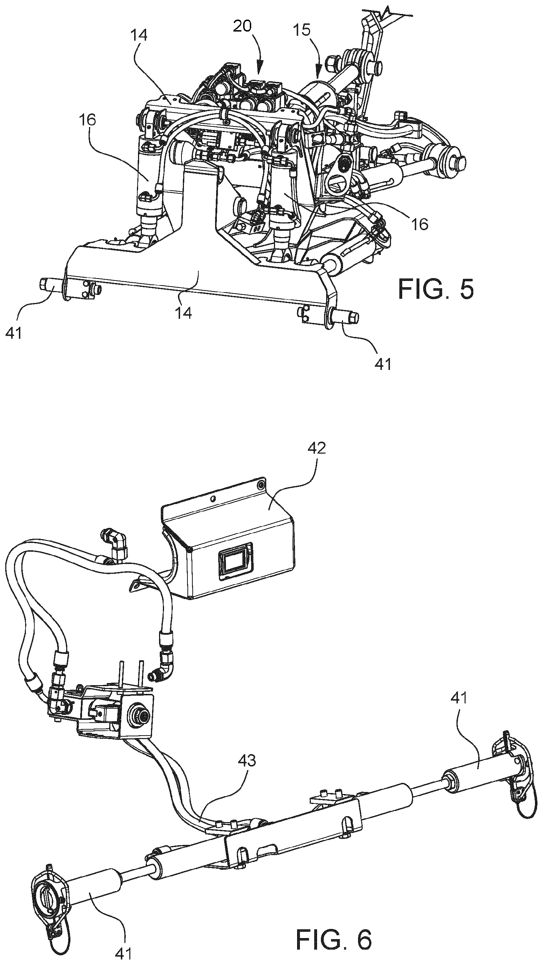

Figure 5 shows an enlarged view of some components of figure 2. In particular, in figure 5 the tiller assembly 30 has been removed and the supporting frame 14 can be seen with the stabilizer devices 16. The reference 41 in figure 5 indicates the coupling devices provided on the supporting frame 14 and configured to couple with corresponding coupling devices provided on the working assembly 30 in order to make the working assembly 30 integral with the supporting frame 14 and therefore with the vehicle 4. In this example the coupling devices provided on the supporting frame 14 are rod elements 41 with axis along the transverse direction which are movable between a retracted position towards the centre of the vehicle and a position extended laterally towards the outside of the vehicle. The corresponding coupling devices provided on the working assembly 30 are holes configured to house the rod elements 41 when in the extended position. Initially the working assembly will be resting on the ground or on a fixed support. The vehicle 4 with rods 41 in the retracted position is moved to bring the frame 14 to a position with respect to the working assembly 30 such that once the rods 41 are extended, they penetrate into the corresponding holes provided in the frame 40 of the working assembly 30. The operation of the rods to bring them from the retracted position to the extended position can be manual, or electric or hydraulic drives or equivalent can be provided which can be operated by the driver in the cabin. Also the locking of the rods in the extended position can be performed manually or via hydraulic or equivalent means that can be operated by the driver in the cabin. As described in detail in the chapter relative to the known art, a necessary requirement for the coupling is that the correct reciprocal coupling position between frame 14 of the vehicle and frame 40 of the working assembly must have been reached.

Figure 6 shows an example of a monitoring device according to the present invention configured to monitor the reciprocal position of the supporting frame 14 with respect to the working assembly 30 at least in the last phases of approach of the frame to the working assembly to be mounted in order to provide the driver with a precise indication of the relative position of the support frame with respect to the working assembly. This avoids the risk of an incorrect reciprocal coupling position between frame 14 of the vehicle and frame 40 of the working assembly prior to operation of the rods 41. In this example the monitoring device is a camera 42 mounted on the vehicle and configured to provide the driver in the cabin, via a monitor, with a precise indication of the working assembly 30 during the approach phases. In the example of figure 6 the rods 41 can be hydraulically operated from the cabin via a circuit indicated schematically by the reference number 43.

The figure shows the camera 42 constrained to the supporting frame 14; in this example it can be noted that the camera 42 is positioned so as to frame portions of the supporting frame 14 and of the frame 40 of the assembly 30 which are provided with colored strips to further assist the driver to reach the correct coupling position in which said strips form a visual indication of the correct positioning.

Lastly it is evident that modifications and variations can be made to the invention described here without departing from the scope of the attached claims.

## Claims

1. A tracked vehicle (1) for ground finishing, in particular a snow groomer vehicle (1) for ski slope finishing; wherein the vehicle (1) comprises:
- a main frame (4) configured to support tracks (6) laterally and a cabin (5) above in which a driver can operate the vehicle (1) ;
- at least one supporting frame (40) coupled to the front and/or rear of the main frame (4) and configured to be selectively releasably coupled to at least one working assembly (30);
- at least one working assembly (30) selectively releasably couplable to the corresponding support frame (40) and configured to finish the ground during advancement of the vehicle (1) when required;
- a coupling assembly configured to selectively couple the working assembly (30) to the supporting frame (40); wherein the coupling assembly is switchable between a first configuration, in which it allows the supporting frame (40) to reach a coupling position with respect to the working assembly (30) to be mounted, and a second configuration, in which, from the coupling position, it constrains the working assembly (30) to the supporting frame (40);
**characterized in that** the vehicle (1) also comprises at least one monitoring device (42) configured to monitor the reciprocal position of the supporting frame (40) with respect to the working assembly (30) at least in the final stages of approaching the supporting frame (40) to the working assembly (30) to be mounted and to provide the driver during the maneuver with a signal function of the relative position of the supporting frame (40) with respect to the working assembly (30).

2. The vehicle as claimed in claim 1, wherein the monitoring device comprises a camera (42) and/or proximity sensors.

3. The vehicle as claimed in claim 1 or 2, wherein the signal generated by the monitoring device (42) is transmitted and reproduced in the cabin (5) to be available to the driver; preferably a screen for reproducing the signal generated by the monitoring device (42) is provided.

4. The vehicle as claimed in any of the preceding claims, wherein graphic elements (44) are shown on the supporting frame (40) and/or work assembly (30) configured such that when the coupling position is reached, the monitoring device (42) transmits an obvious signal to the driver that the coupling position has been reached.

5. The vehicle as claimed in claim 4, wherein the graphic elements include colored stripes (44) contrasting with the color of the supporting frame and on the working assembly.

6. The vehicle as claimed in any of the previous claims, wherein the monitoring device (42) is configured to transmit suggestions to the driver to correct the approach phase and arrive at the correct coupling position.

7. The vehicle as claimed in any of the preceding claims, wherein at least one recognition element is shown or reproduced on the working assembly (30); the monitoring device (42) transmitting this data to a control unit, which on the basis of this information identifies which working assembly (30) is to be mounted and autonomously controls the vehicle (1) until the correct coupling position is reached.

8. The vehicle as claimed in any of the preceding claims, wherein the coupling assembly is of the type operable by hand by the driver or is of the type operable by the driver directly from the cabin (5).

9. The vehicle as claimed in claim 8, wherein the coupling assembly is of the type operable by the driver directly from the cabin (5) and comprises telescopic rod elements (41) mounted on the support frame (40) that move from a retracted resting configuration to an extracted position in which they penetrate seats or holes obtained in the working assembly (30).

10. The vehicle as claimed in claim 9, wherein the motion drive of the telescopic rod elements (41) is electric or hydraulic.

11. The vehicle as claimed in any of the previous claims, wherein a coupling assembly locking system is provided in the working configuration in which it constrains the working assembly (30) to the support frame (40).

12. The vehicle as claimed in claim 11, wherein the locking system is of mechanical or hydraulic type.

13. The vehicle as claimed in claim 11 or 12, wherein a control is provided in the cabin (5) to deactivate the locking system.

14. The vehicle as claimed in any one of the preceding claims, wherein the vehicle (1) is a snow groomer and the working assembly (30) comprises a tiller (12) and a finishing pad (13).

15. A method for operating a tracked vehicle (1) for ground finishing, in particular a method of coupling a front or rear working assembly (30) for ski slope finishing to a snow groomer vehicle (1); wherein the method comprises the steps of:
(a) providing a tracked vehicle (1) comprising a cabin (5) for a driver, a main frame (4) and at least one supporting frame (40) coupled at the front and/or at the rear to the main frame (4) and including first coupling devices to selectively releasably couple the supporting frame (40) to at least one working assembly (30);
(b) providing at least one working assembly (30) comprising selectively releasable second coupling devices for coupling to the first coupling devices of the supporting frame (40) of the vehicle; wherein the coupling between the first and second coupling devices can only occur at a reciprocal coupling distance;
(c) moving the tracked vehicle (1) to bring the first coupling devices of the supporting frame (40) to the reciprocal coupling distance from the second coupling devices of the working assembly (30);
(d) coupling the first and second coupling devices together to make the working assembly (30) integral with the supporting frame (40);
**characterized in that**
step (c) of moving the tracked vehicle (1) to bring the first coupling devices of the supporting frame (40) to the reciprocal coupling distance from the second coupling devices of the working assembly (30) comprises the sub-steps of:
(e) monitoring the reciprocal position of the vehicle (1) in relation to the working assembly (30) by means of a monitoring device (42);
(f) transmitting the monitored signal to the driver in the cabin (5) .
